# FASCICULE DE BREVET EUROPEEN

(11) **EP 1 431 537 B1**
(45) Date de publication et mention de la délivrance du brevet: **05.07.2006**
(21) Numéro de dépôt: 03293127.1
(22) Date de dépôt: 12.12.2003
(51) Int. Cl.: F01N 7/10, F02B 39/00, F01D 25/28, F02C 6/12, F02B 67/10, F02B 37/02

(54) **Collecteur d'échappement de véhicule automobile comportant une bride de support d'un composant**
Abgaskrümmer für Kraftfahrzeug mit einem Flanschträger für ein Bauteil
Exhaust manifold for a motor vehicle with a support flange for a device

(30) Priorité: 19.12.2002 FR 0216155
(43) Date de publication de la demande: 23.06.2004
(73) Titulaire: Renault s.a.s., 92100 Boulogne Billancourt (FR)
(72) Inventeur: Dumas, Eric, 78800 Houilles (FR)
(74) Mandataire: Rougemont, Bernard

(56) Documents cités:
- WO-A-02/073010
- DE-A- 10 150 527
- DE-A- 19 548 175
- US-A- 4 475 341
- US-A- 4 709 548
- US-A- 5 261 237
- PATENT ABSTRACTS OF JAPAN vol. 2002, no. 09, 4 septembre 2002 (2002-09-04) & JP 2002 155742 A (HAYASHIDA KOGYO KK), 31 mai 2002 (2002-05-31)

## Description

L'invention concerne un collecteur d'échappement de véhicule automobile.

L'invention concerne plus particulièrement un collecteur d'échappement de véhicule automobile, du type qui comporte un conduit interne d'acheminement des gaz d'échappement reliant au moins un orifice de sortie de gaz d'une culasse d'un moteur à combustion interne du véhicule à un orifice d'entrée de gaz d'un composant d'une ligne d'échappement du véhicule, notamment un orifice d'entrée d'un turbocompresseur, du type dans lequel au moins une extrémité amont du conduit interne fait partie d'une première bride de fixation du collecteur sur la culasse, du type dans lequel une extrémité aval du conduit fait partie de moyens de raccordement à l'orifice d'entrée du composant, et du type qui comporte des moyens de support du composant par le collecteur.

Il est fréquent que les moteurs à combustion interne soient suralimentés par un turbocompresseur de façon à améliorer leurs performances. Le turbocompresseur permet notamment d'augmenter leur rendement et leur puissance.

Selon une structure générale connue de l'état de la technique, le turbocompresseur comporte une turbine et un compresseur qui sont portés par un arbre de turbocompresseur. La turbine est logée dans un carter de turbine sensiblement de révolution cylindrique qui comporte généralement un orifice tangentiel d'alimentation de la turbine.

Le turbocompresseur est entraîné en rotation par les gaz d'échappement qui résultent de la combustion du carburant dans les chambres de combustion du moteur et qui sont conduits jusqu'à l'orifice d'alimentation du carter de turbine. Les gaz d'échappement sont expulsés des chambres de combustion par l'intermédiaire de canaux d'échappement traversant la culasse du moteur, puis ils sont recueillis par un collecteur d'échappement qui les guide depuis la culasse jusqu'au turbocompresseur.

Le collecteur d'échappement est principalement constitué d'au moins un conduit qui est destiné à canaliser l'écoulement des gaz d'échappement jusqu'au turbocompresseur, et de deux brides de fixation du conduit. Le conduit comporte au moins un orifice d'entrée qui est raccordé aux canaux d'échappement de la culasse, et il comporte un orifice de sortie qui est raccordé au turbocompresseur.

La première bride de fixation, communément appelée bride amont en référence au sens d'écoulement des gaz, permet de fixer, et de raccorder de manière étanche, l'orifice d'entrée du conduit sur une paroi externe de la culasse du moteur. La seconde bride de fixation, communément appelée bride aval, permet de fixer, et de raccorder de manière étanche, l'orifice de sortie du conduit au turbocompresseur.

Le collecteur a aussi pour fonction de supporter, au moins partiellement, le poids du turbocompresseur. Ainsi, le poids et les efforts exercés par le turbocompresseur sont transmis à la culasse successivement par l'intermédiaire de la bride aval, du conduit, puis de la bride amont. Le collecteur d'échappement est aussi conçu de façon à résister aux vibrations produites par le turbocompresseur.

Il est connu que le collecteur d'échappement, c'est-à-dire le ou les conduits et les deux brides amont et aval de fixation, soit réalisé en une seule pièce, par exemple en une pièce de fonderie en fonte ou en acier.

Cependant, les gaz d'échappement qui circulent dans le collecteur ont une température élevée, et les caractéristiques mécaniques du collecteur d'échappement sont modifiées à ces températures. Par exemple la résistance mécanique du collecteur d'échappement aux sollicitations mécaniques du turbocompresseur est sensiblement diminuée. De plus, ces effets néfastes de la température sont favorisés par les formes très massives des brides amont et aval de fixation obtenues en fonderie.

En outre, les moteurs actuels devenant de plus en plus compacts, la place disponible pour l'implantation du turbocompresseur, et plus généralement des systèmes d'échappement, est de plus en plus restreinte. Le rapprochement physique entre le turbocompresseur et la culasse impose donc un collecteur d'échappement plus court. La bride aval qui permet de fixer le turbocompresseur sur le collecteur d'échappement devient alors difficilement réalisable en fonderie à cause des contraintes techniques liées à la forme compacte et complexe du collecteur d'échappement.

Enfin, lorsque le véhicule est équipé d'un dispositif de dépollution des gaz d'échappement du type catalyseur, il est généralement nécessaire que les gaz d'échappement provoquent la montée rapide en température de ce dispositif au-delà d'une température d'amorçage pour que le dispositif devienne efficace.

Or, les collecteurs réalisés en fonte ou en acier ont une inertie thermique très élevée, c'est-à-dire que la température du conduit augmente lentement. Tant que le collecteur n'est pas chaud, les gaz d'échappement sont refroidis lorsqu'ils circulent dans le collecteur. Ainsi, le catalyseur ne peut atteindre sa température d'amorçage qu'après que le collecteur ait été chauffé. Un tel collecteur est donc préjudiciable pour les performances du catalyseur.

Il est aussi connu d'utiliser des dispositifs communément appelés "turbocollecteurs". Un turbocollecteur est constitué d'un turbocompresseur comportant un collecteur d'échappement intégré qui est réalisé venu de matière avec le carter du turbocompresseur. Les gaz d'échappement sont alors collectés directement à l'entrée d'alimentation du turbocompresseur par plusieurs conduits d'entrée intégrés au turbocollecteur. Il n'y a ainsi qu'une seule bride amont de fixation entre le turbocollecteur et la culasse. Le problème de l'encombrement des pièces réalisées en fonderie est partiellement résolu.

Cependant, la réalisation d'un tel turbocollecteur est très onéreuse. De plus, chaque turbocollecteur est généralement spécifiquement adapté à un type de moteur donné, et de ce fait il ne peut être adapté à d'autres types de moteurs.

Ainsi, il est nécessaire de concevoir et de produire un type de turbocollecteur adapté pour chaque type de moteur, alors qu'un même turbocompresseur peut traditionnellement être adapté sur différents types de moteur en changeant simplement le collecteur d'échappement.

De plus, la partie du turbocollecteur formant collecteur d'échappement est réalisée venu de matière avec le carter du turbocompresseur qui est généralement en fonte. Un tel turbocollecteur ne résout donc pas le problème lié à l'inertie thermique du collecteur d'échappement.

Il est aussi connu que le collecteur d'échappement soit principalement constitué d'un conduit et de deux brides amont et aval séparées. Les brides amont et aval sont fixées par soudage sur le conduit qui fait partie d'un élément qui est par exemple réalisé en tôle.

Un tel élément présente une inertie thermique très faible, c'est-à-dire que la température de l'élément augmente très rapidement. Ainsi, les gaz d'échappement dissipent très peu de chaleur lorsqu'ils circulent dans un tel collecteur d'échappement car il ne reste pas froid longtemps. Ceci permet aux gaz d'échappement d'amorcer, rapidement après le démarrage du moteur, un catalyseur situé en aval du turbocompresseur.

Cependant, un turbocompresseur a une masse importante qui nécessite des moyens de maintien rigides et résistants pour résister aux sollicitations vibratoires. Or, le conduit en tôle n'a pas une rigidité, ni une résistance, suffisantes pour supporter les contraintes mécaniques du turbocompresseur. Un tel collecteur d'échappement n'est donc pas susceptible de supporter longtemps un turbocompresseur sans dommage.

Une telle combinaison d'un collecteur avec un turbocompresseur est divulguée, par exemple, dans DE 195 48 175 A.

Afin de résoudre ces inconvénients, l'invention propose un collecteur d'échappement du type décrit précédemment, dans lequel les moyens de raccordement en gaz du turbocompresseur sont découplés de ses moyens de support sur le collecteur.

Dans ce but, l'invention propose un collecteur d'échappement du type décrit précédemment caractérisé en ce que les moyens de support sont indépendants des moyens de raccordement et en ce qu'ils sont constitués d'une seconde bride portée par la première bride.

Selon d'autres caractéristiques de l'invention :
- la partie du conduit d'acheminement des gaz d'échappement qui est interposée entre la première bride et les moyens de raccordement est délimitée par un élément réalisé en tôle mince,
- la première bride est constituée d'une plaque rigide qui comporte dans une partie centrale au moins un orifice formant extrémité amont du conduit interne et qui comporte sur son pourtour des perçages pour la fixation de la première bride sur la culasse,
- les moyens de raccordement comportent une semelle, formant l'extrémité aval du conduit interne, dont une portée cylindrique intérieure est montée et soudée sur une portée cylindrique complémentaire de l'élément en tôle mince, et dont une face libre d'extrémité est destinée à être ajustée et fixée contre une face complémentaire d'un pied du composant,
- la semelle est annulaire, le pied du composant comporte au moins une portée extérieure de révolution, et les moyens de raccordement comportent un collier enserrant radialement et axialement la périphérie de la semelle annulaire et la portée extérieure de révolution du pied du composant.
- la périphérie de la semelle annulaire et la portée extérieure du pied du composant sont tronconiques, de conicité égales et opposées, le collier est fendu et il comporte au moins une gorge comportant une section en "V" qui est susceptible, lorsque le pied du composant et la semelle sont réunis, de s'adapter sur la périphérie tronconique de la semelle et sur la portée tronconique extérieure du pied du composant pour les immobiliser radialement et axialement,
- la périphérie de la semelle annulaire et la portée extérieure du pied du composant sont cylindriques, de même diamètre, le collier est fendu et il comporte au moins une gorge comportant une section en "U" qui est susceptible, lorsque le pied du composant et la semelle sont réunis, de s'adapter sur la périphérie cylindrique de la semelle et sur la portée cylindrique extérieure du pied du composant pour les immobiliser radialement et axialement,
- la seconde bride comporte une plaque sensiblement verticale dont une extrémité inférieure est soudée sur le pourtour de la première bride et dont une extrémité supérieure porte au moins une paire horizontale de pattes de fixation perpendiculaires à la plaque qui sont tournées sensiblement vers la semelle et qui comportent des moyens de fixation au composant,
- les pattes de fixation de la seconde bride sont agencées de part et d'autre des bords verticaux de plaque et elles comportent chacune au moins deux perçages, alignés chacun avec un perçage de l'autre patte, qui sont destinés à recevoir chacun un goujon de fixation traversant le corps du composant.

D'autres caractéristiques et avantages de l'invention apparaîtront au cours de la lecture de la description détaillée qui suit pour la compréhension de laquelle on se reportera aux figures annexées parmi lesquelles :
- la figure 1 est une vue en perspective d'un moteur à combustion interne qui est suralimenté par un turbocompresseur et qui est équipé d'un collecteur d'échappement réalisé selon l'invention ;
- la figure 2 est une vue en perspective d'un collecteur d'échappement réalisé selon un état antérieur de la technique ;
- la figure 3 est une vue assemblée de détail en perspective du collecteur d'échappement de la figure 1 ;
- la figure 4 est une vue éclatée de détail en perspective du collecteur d'échappement de la figure 1.

Dans la description qui suit, des éléments identiques, analogues ou similaires seront désignés par les mêmes références.

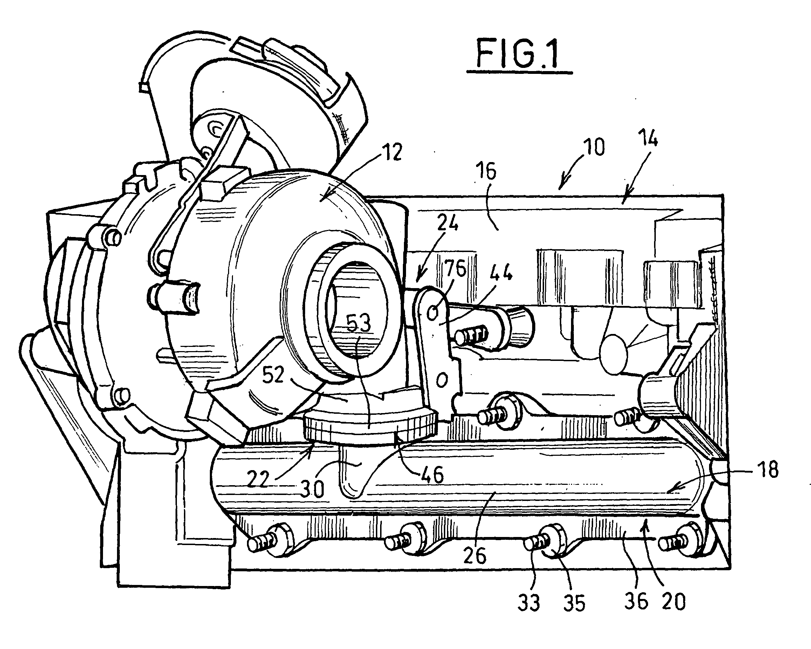

On a représenté à la figure 1 un moteur à combustion interne 10 de véhicule automobile dont les gaz d'échappement alimentent un composant d'une ligne d'échappement (non représentée) du véhicule, par exemple un turbocompresseur 12.

Dans la suite de la présente description, le composant sera assimilé au turbocompresseur 12, mais il sera compris que cette configuration n'est pas limitative de l'invention et que tout composant de la ligne d'échappement du véhicule pourrait convenir à la mise en oeuvre de l'invention.

Le moteur 10 comporte notamment une culasse 14 selon la figure 1. La culasse 14 comporte quatre canaux (non représentés) d'évacuation des gaz d'échappement qui sont destinés à évacuer les gaz d'échappement, depuis les chambres de combustion du moteur 10 chacun jusqu'à un orifice de sortie des gaz d'échappement qui débouche dans une paroi externe avant 16 de la culasse 14.

Le moteur 10 comporte un collecteur d'échappement 18 qui est réalisé selon les enseignements de l'invention. Le collecteur 18 est agencé entre la culasse 14 du moteur 10 et le turbocompresseur 12.

De manière connue, le collecteur 18 d'échappement comporte un conduit interne (non représenté) d'acheminement des gaz d'échappement qui relie au moins un orifice de sortie de gaz de la culasse 14, agencé dans la paroi externe avant 16, à un orifice d'entrée de gaz du turbocompresseur 12.

De manière connue, au moins une extrémité amont (non représentée) du conduit interne fait partie d'une première bride 20 de fixation du collecteur 18 sur la culasse 14. D'une manière analogue, une extrémité aval (non représentée) du conduit fait partie de moyens 22 de raccordement à l'orifice d'entrée du turbocompresseur 12. Par ailleurs, le collecteur 18 comporte des moyens 24 de support du composant 12 par le collecteur 18.

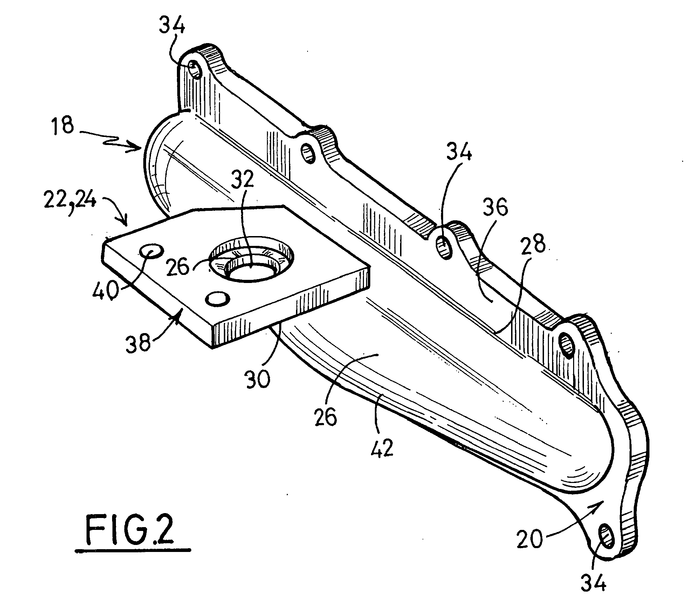

Les caractéristiques et avantages de l'invention seront mieux compris à la lumière de la description d'un collecteur 18 conforme à l'état de la technique tel qu'il a été représenté sur la figure 2.

Le collecteur 18 de la figure 2 comporte un conduit interne dont une partie est délimitée par un élément coudé 26 de forme complexe aussi appelé "plenum", qui est réalisé en tôle mince.

L'élément 26 comporte, à une première extrémité 28 qui est fixée, notamment par soudage, sur la première bride 20, un large orifice oblong (non représenté) par lequel pénètrent les gaz d'échappement. L'élément 26 comporte, à son extrémité 30 opposée, un orifice supérieur circulaire 32 centré par lequel sortent les gaz d'échappement.

L'orifice oblong de la première extrémité 28 est suffisamment large pour recueillir les gaz d'échappement provenant d'orifices (non représentés) pratiqués à travers la première bride 20 et qui coïncident avec des canaux d'échappement de la culasse 14, laquelle culasse 14 comporte par exemple quatre canaux dans le cas d'une culasse à quatre cylindres. Les orifices pratiqués à travers la première bride 18 forment l'extrémité amont du conduit interne.

Comme l'illustre la figure 2, la première bride 20 de fixation 28 est constituée d'une plaque rigide d'orientation sensiblement verticale qui est prévue pour que l'extrémité 28 de l'élément 26 s'adapte autour des orifices de la première bride 20.

La première bride 20 comporte sur son pourtour des perçages 34 qui sont destinés à positionner le collecteur 18 d'échappement sur la paroi externe avant 16 de la culasse 14, et à le fixer par exemple au moyen de goujons traversant les perçages et d'écrous complémentaires (non représentés) prenant appui sur la face libre 36 de la première bride 20.

Une configuration analogue a été représentée à la figure 1 dans laquelle des goujons 33 et des écrous 35 associés permettent l'immobilisation de la bride 20.

Dans l'exemple de réalisation conventionnelle de la figure 2, les moyens 24 de support du turbocompresseur 12 et les moyens de raccordement 22 sont portés par une bride aval 38 en forme de plaque rigide qui est adaptée autour de l'orifice supérieur circulaire 32 de sortie des gaz.

Le pourtour de la bride aval 38 comporte au moins deux perçages 40 d'axe vertical qui sont destinés à permettre le positionnement et la fixation d'une semelle conforme (non représentée) du turbocompresseur 12 sur le collecteur d'échappement 18.

Selon ce mode de réalisation, lorsque le collecteur 18 est fixé sur la culasse 14 et que le turbocompresseur 12 est monté sur la bride aval 38 du collecteur d'échappement 18, l'élément 26 du collecteur d'échappement 18 supporte le poids du turbocompresseur 12. Le coude 42 de l'élément 26 doit en particulier résister à une forte concentration de contraintes mécaniques et thermiques.

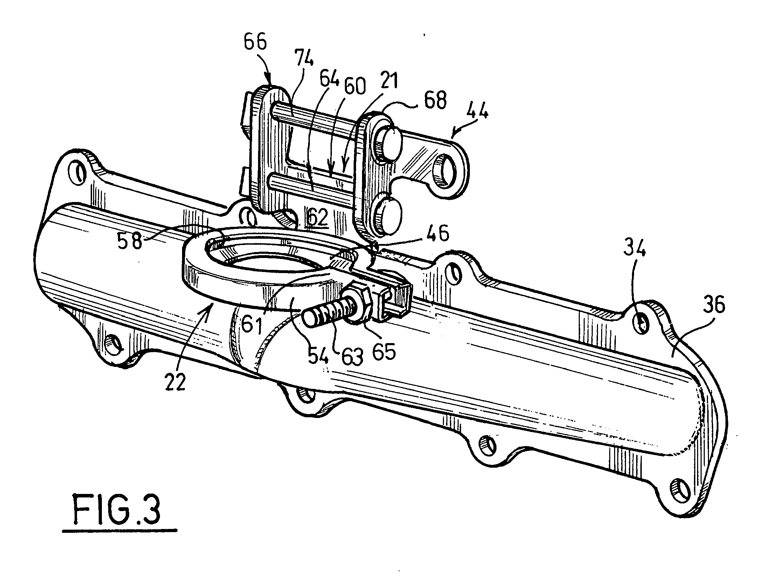

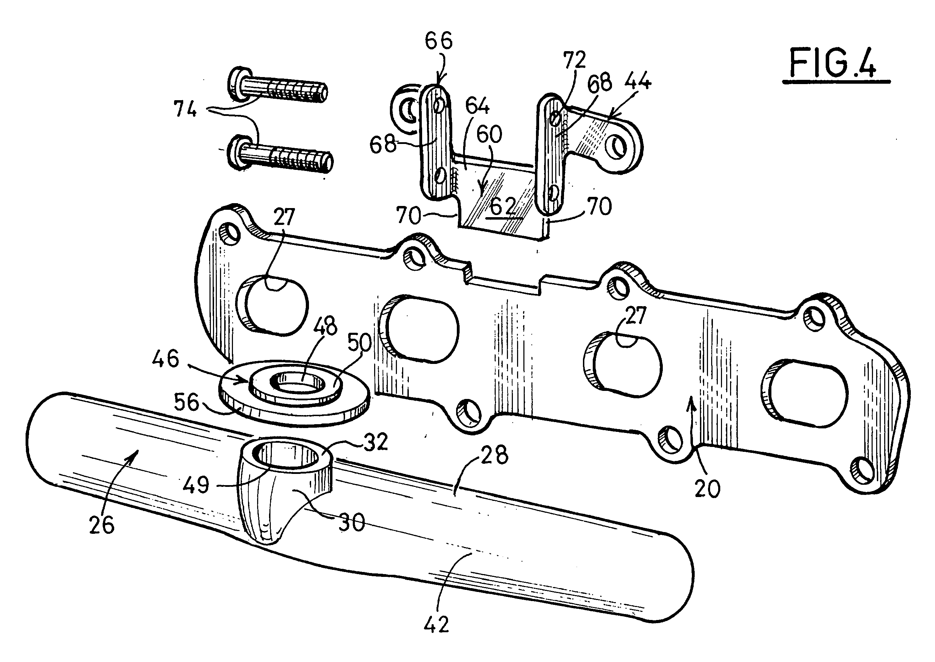

Pour remédier à cet inconvénient, comme l'illustrent les figures 3 et 4, l'invention propose un collecteur 18 d'échappement du type décrit précédemment, caractérisé en ce que les moyens 24 de support sont indépendants des moyens 22 de raccordement et en ce qu'ils sont constitués d'une seconde bride 44 portée par la première bride 20.

Dans cette configuration, d'une façon analogue au collecteur selon l'état de la technique, l'élément 26 qui comporte la partie du conduit d'acheminement des gaz d'échappement qui est interposée entre la première bride 20 et les moyens 22 de raccordement, est réalisé en tôle mince. Comme l'illustre la figure 4, l'élément 26 est destiné à collecter les gaz d'échappement sortant d'orifices 27 pratiqués dans la première bride 20.

Toutefois, à la différence du collecteur 18 de la figure 2, les moyens 22 de raccordement qui ont été représentés aux figures 3 et 4 comportent une semelle 46, formant l'extrémité aval du conduit interne, dont une portée 48 cylindrique intérieure est montée et soudée sur une portée 49 cylindrique complémentaire de l'élément 26 formant la partie en tôle mince du conduit interne.

Une face 50 libre d'extrémité de la semelle 46 est destinée à être ajustée et fixée contre une face complémentaire (non représentée) du pied 52 du turbocompresseur 12 qui a été représenté à la figure 1.

Dans les modes de réalisation préférés de l'invention, et de manière non limitative de celle-ci, la semelle 46 est annulaire, et le pied 52 du turbocompresseur comporte au moins une portée extérieure de révolution. Dans cette configuration, comme l'illustrent la figures 3, les moyens 22 de raccordement comportent un collier 54 enserrant radialement et axialement la périphérie 56 de la semelle 46 annulaire et la portée extérieure 53 de révolution du pied 52 du turbocompresseur 12 qui a été représentée à la figure 1.

Deux modes de réalisation du collier 54, du pied 52 du turbocompresseur, et de la semelle 46 peuvent être envisagés.

Selon un premier mode de réalisation qui a été représenté aux figures 3 et 4, la périphérie 56 de la semelle 46 annulaire et la portée extérieure du pied 52 du turbocompresseur 12 sont cylindriques et de même diamètre. Tel que représenté à la figure 3, le collier 54 est fendu et comporte deux branches 61 susceptibles d'être serrées l'une contre l'autre par une vis 63 et un écrou 65. Le collier 54 comporte au moins une gorge 58 comportant une section en "U" qui est susceptible, lorsque le pied 52 du turbocompresseur 12 et la semelle 46 sont réunis, de s'adapter sur la périphérie 56 cylindrique de la semelle et sur la portée cylindrique extérieure du pied 52 du turbocompresseur pour les immobiliser radialement et axialement.

Selon un second mode de réalisation (non représenté) la périphérie de la semelle annulaire et la portée extérieure du pied du composant sont tronconiques, de conicité égales et opposées, et le collier est fendu. Le collier comporte au moins une gorge comportant une section en "V" qui est susceptible, lorsque le pied du composant et la semelle sont réunis, de s'adapter sur la périphérie tronconique de la semelle et sur la portée tronconique extérieure du pied du composant pour les immobiliser radialement et axialement.

Conformément à l'invention, les moyens 44 de support comportent une seconde bride 44 qui comporte une plaque 60 sensiblement verticale dont une extrémité inférieure 62 forme une patte qui est soudée sur le pourtour de la première bride 20 et dont une extrémité supérieure 64 porte au moins une paire 66 horizontale de pattes 68 de fixation perpendiculaires à la plaque 60. Les pattes 66 sont tournées sensiblement vers la semelle 46 et elles comportent des moyens de fixation au turbocompresseur 12.

Plus particulièrement, les pattes 66 de fixation de la seconde bride 44 sont agencées de part et d'autre des bords verticaux 70 de la plaque 60 et elles comportent chacune au moins deux perçages 72, alignés chacun avec un perçage 72 de l'autre patte 66.

Il sera compris que la plaque 60 pourrait comporter plus d'une paire 68 de pattes 66.

Comme l'illustrent les figures 1 et 3, ces perçages 72 sont destinés à recevoir chacun un goujon 74 de fixation traversant un perçage 76 du corps du turbocompresseur 12.

Ainsi les efforts créés par le turbocompresseur 12, tel que le poids et les vibrations, sont repris directement par la seconde bride 44, puis transmis à la culasse 14 par l'intermédiaire de la première bride 20. De la sorte, ces efforts ne sont pas transmis à l'élément 26 en tôle mince.

Grâce à un tel collecteur 18, l'élément 26 en tôle mince a pour seule fonction de canaliser les gaz d'échappement jusqu'au turbocompresseur 12, tandis que les fonctions de support et de maintien du turbocompresseur 12 sont assurées par les deux brides 20 et 44. Ainsi, contrairement au collecteur 20 réalisé selon l'état de la technique de la figure 2, l'élément 26 n'est globalement pas soumis aux contraintes mécaniques résultant de la présence du turbocompresseur 12.

En outre, l'élément 26, grâce à sa faible inertie thermique, monte rapidement en température dés le début du passage des gaz d'échappement.

Le collecteur 18 selon l'invention est donc particulièrement avantageux tant en termes de résistance, que de poids et d'inertie thermique.

## Revendications

1. Collecteur (18) d'échappement de véhicule automobile, du type qui comporte un conduit interne d'acheminement des gaz d'échappement reliant au moins un orifice de sortie de gaz d'une culasse (14) d'un moteur (10) à combustion interne du véhicule à un orifice d'entrée de gaz d'un composant (12) d'une ligne d'échappement du véhicule, notamment un orifice d'entrée d'un turbocompresseur (12), du type dans lequel au moins une extrémité amont du conduit interne fait partie d'une première bride (20) de fixation du collecteur (18) sur la culasse (14), du type dans lequel une extrémité (30) aval du conduit fait partie de moyens (22) de raccordement à l'orifice d'entrée du composant, et du type qui comporte des moyens (24) de support du composant (12) par le collecteur (18),
**caractérisé en ce que** les moyens (24) de support sont indépendants des moyens (22) de raccordement et **en ce qu'**ils sont constitués d'une seconde bride (44) portée par la première bride (20).

2. Collecteur (18) d'échappement selon la revendication précédente, **caractérisé en ce que** la partie du conduit d'acheminement des gaz d'échappement qui est interposée entre la première bride (20) et les moyens (22) de raccordement est délimitée par un élément (26) réalisé en tôle mince.

3. Collecteur (18) d'échappement selon l'une des revendications précédentes, **caractérisé en ce que** la première bride (20) est constituée d'une plaque rigide qui comporte dans une partie centrale au moins un orifice formant extrémité amont du conduit interne et qui comporte sur son pourtour des perçages (34) pour la fixation de la première bride (20) sur la culasse (14).

4. Collecteur (18) d'échappement selon l'une des revendications 2 ou 3, **caractérisé en ce que** les moyens (22) de raccordement comportent une semelle (46), formant l'extrémité aval (30) du conduit interne, dont une portée (48) cylindrique intérieure est montée puis soudée sur une portée (49) cylindrique complémentaire de l'élément (26) en tôle mince, et dont une face (50) libre d'extrémité est destinée à être ajustée et fixée contre une face complémentaire d'un pied (52) du composant (12).

5. Collecteur (18) d'échappement selon la revendication précédente, **caractérisé en ce que** la semelle (46) est annulaire, **en ce que** le pied (52) du composant (12) comporte au moins une portée extérieure de révolution, et **en ce que** les moyens (22) de raccordement comportent un collier (54) enserrant radialement et axialement la périphérie (56) de la semelle (46) annulaire et la portée extérieure de révolution du pied (52) du composant (12).

6. Collecteur (18) d'échappement selon la revendication précédente, **caractérisé en ce que** la périphérie de la semelle (46) annulaire et la portée extérieure du pied (52) du composant (12) sont tronconiques, de conicité égales et opposées, **en ce que** le collier (54) est fendu et **en ce qu'**il comporte au moins une gorge comportant une section en "V" qui est susceptible, lorsque le pied (52) du composant et la semelle (46) sont réunis, de s'adapter sur la périphérie tronconique de la semelle (46) et sur la portée tronconique extérieure du pied (52) du composant (12) pour les immobiliser radialement et axialement.

7. Collecteur (18) d'échappement selon la revendication précédente, **caractérisé en ce que** la périphérie (56) de la semelle (46) annulaire et la portée extérieure du pied (52) du composant (12) sont cylindriques, de même diamètre, **en ce que** le collier (54) est fendu et **en ce qu'**il comporte au moins une gorge (58) comportant une section en "U" qui est susceptible, lorsque le pied (52) du composant (12) et la semelle (46) sont réunis, de s'adapter sur la périphérie (56) cylindrique de la semelle (46) et sur la portée cylindrique extérieure du pied (52) du composant (12) pour les immobiliser radialement et axialement.

8. Collecteur (18) d'échappement selon l'une quelconque des revendications 4 à 7, **caractérisé en ce que** la seconde bride (44) comporte une plaque (60) sensiblement verticale dont une extrémité inférieure (62) est soudée sur le pourtour de la première bride (20) et dont une extrémité supérieure (64) porte au moins une paire (66) horizontale de pattes (68) de fixation perpendiculaires à la plaque (60) qui sont tournées sensiblement vers la semelle (46) et qui comportent des moyens de fixation au composant (12).

9. Collecteur (18) d'échappement selon la revendication précédente, **caractérisé en ce que** les pattes (68) de fixation de la seconde bride (44) sont agencées de part et d'autre des bords verticaux (70) de plaque (60) et **en ce qu'**elles comportent chacune au moins deux perçages (72), alignés chacun avec un perçage (72) de l'autre patte (68), qui sont destinés à recevoir chacun un goujon (74) de fixation traversant le corps du composant (12).

## Claims

1. Motor vehicle exhaust manifold (18) of the type which comprises an internal exhaust-gas-routing duct connecting at least one gas outlet orifice of a cylinder head (14) of an internal combustion engine (10) of the vehicle to a gas inlet orifice of a component (12) of an exhaust line of the vehicle, in particular an inlet orifice of a turbocharger (12), of the type in which at least one upstream end of the internal duct forms part of a first mounting flange (20) for securing the manifold (18) to the cylinder head (14), of the type in which a downstream end (30) of the duct forms part of means (22) for connection to the inlet orifice of the component, and of the type which comprises means (24) for supporting the component (12) by way of the manifold (18), **characterized in that** the support means (24) are independent of the connecting means (22), and **in that** they consist of a second flange (44) borne by the first flange (20).

2. Exhaust manifold (18) according to the preceding claim, **characterized in that** that part of the exhaust-gas-routing duct which is interposed between the first flange (20) and the connecting means (22) is delimited by an element (26) made of thin sheet metal.

3. Exhaust manifold (18) according to either of the preceding claims, **characterized in that** the first flange (20) consists of a rigid plate which comprises, in a central portion, at least one orifice forming the upstream end of the internal duct and which comprises, over its periphery, drilled holes (34) for securing the first flange (20) to the cylinder head (14).

4. Exhaust manifold (18) according to either of Claims 2 and 3, **characterized in that** the connecting means (22) comprise a baseplate (46), forming the downstream end (30) of the internal duct, an interior cylindrical bearing surface (48) of which baseplate is mounted on and then welded to a complementary cylindrical bearing surface (49) of the element (26) made of thin sheet metal, and a free end face (50) of which baseplate is intended to be fitted and secured against a complementary face of a foot (52) of the component (12).

5. Exhaust manifold (18) according to the preceding claim, **characterized in that** the baseplate (46) is annular, **in that** the foot (52) of the component (12) comprises at least one exterior axisymmetrical bearing surface, and **in that** the connecting means (22) comprise a collar (54) which grips radially and axially around the periphery (56) of the annular baseplate (46) and around the exterior axisymmetrical bearing surface of the foot (52) of the component (12).

6. Exhaust manifold (18) according to the preceding claim, **characterized in that** the periphery of the annular baseplate (46) and the exterior bearing surface of the foot (52) of the component (12) are frustoconical, with equal and opposed tapers, **in that** the collar (54) is split and **in that** it comprises at least one groove comprising a "V"-shaped cross section which, when the foot (52) of the component and the baseplate (46) are combined, is able to be fitted onto the frustoconical periphery of the baseplate (46) and onto the exterior frustoconical bearing surface of the foot (52) of the component (12) for the purpose of immobilizing them radially and axially.

7. Exhaust manifold (18) according to the preceding claim, **characterized in that** the periphery (56) of the annular baseplate (46) and the exterior bearing surface of the foot (52) of the component (12) are cylindrical, with the same diameter, **in that** the collar (54) is split and **in that** it comprises at least one groove (58) comprising a "U"-shaped cross section which, when the foot (52) of the component (12) and the baseplate (46) are combined, is able to be fitted onto the cylindrical periphery (56) of the baseplate (46) and onto the exterior cylindrical bearing surface of the foot (52) of the component (12) for the purpose of immobilizing them radially and axially.

8. Exhaust manifold (18) according to any one of Claims 4 to 7, **characterized in that** the second flange (44) comprises a substantially vertical plate (60) having a lower end (62) which is welded to the periphery of the first flange (20) and having an upper end (64) which bears at least one horizontal pair (66) of mounting lugs (68) perpendicular to the plate (60), these lugs substantially facing the baseplate (46) and comprising means for securing to the component (12).

9. Exhaust manifold (18) according to the preceding claim, **characterized in that** the mounting lugs (68) of the second flange (44) are arranged on either side of the vertical edges (70) of the plate (60), and **in that** they each comprise at least two drilled holes (72), each aligned with a drilled hole (72) of the other lug (68), which are intended to receive in each case a mounting stud (74) passing through the body of the component (12).

## Patentansprüche

1. Abgaskrümmer (18) für ein Kraftfahrzeug jener Art, die eine innere Abgasförderleitung aufweist, die mindestens eine Gasaustrittsöffnung eines Zylinderkopfes (14) eines Verbrennungsmotors (10) des Fahrzeugs mit einer Gaseintrittsöffnung eines Bauteils (12) einer Abgasleitung des Fahrzeugs, insbesondere einer Eintrittsöffnung eines Turboladers (12) verbindet, jener Art, bei der mindestens ein stromaufwärtiges Ende der inneren Leitung einen Teil eines ersten Flansches (20) zur Befestigung des Krümmers (18) am Zylinderkopf (14) bildet, jener Art, bei der ein stromabwärtiges Ende (30) der Leitung einen Teil von Mitteln (22) zur Verbindung mit der Eintrittsöffnung des Bauteils bildet, und jener Art, die Mittel (24) zur Abstützung des Bauteils (12) durch den Krümmer (18) umfasst,
**dadurch gekennzeichnet, dass** die Abstützungsmittel (24) unabhängig von den Verbindungsmitteln (22) sind und dass sie einen von dem ersten Flansch (20) getragenen zweiten Flansch (44) bilden.

2. Abgaskrümmer (18) nach dem vorhergehenden Anspruch, **dadurch gekennzeichnet, dass** der Teil der Abgasförderleitung, der zwischen dem ersten Flansch (20) und den Verbindungsmitteln (22) angeordnet ist, durch ein aus einem dünnen Blech hergestelltes Element (26) begrenzt wird.

3. Abgaskrümmer (18) nach einem der vorhergehenden Ansprüche, **dadurch gekennzeichnet, dass** der erste Flansch (20) aus einer starren Platte besteht, die in einem mittleren Teil mindestens eine Öffnung aufweist, die das stromaufwärtige Ende der inneren Leitung bildet, und die an ihrem Umfang Bohrungen (34) zur Befestigung des ersten Flansches (20) an dem Zylinderkopf (14) aufweist.

4. Abgaskrümmer (18) nach Anspruch 2 oder 3, **dadurch gekennzeichnet, dass** die Verbindungsmittel (22) eine Fußplatte (46) aufweisen, die das stromabwärtige Ende (30) der inneren Leitung bildet und von der eine innere zylindrische Anlagefläche (48) an einer komplementären zylindrischen Anlagefläche (49) des Elements (26) aus dünnem Blech angebracht und dann damit verschweißt wird, und von der eine freie Endfläche (50) an einer komplementären Fläche eines Fußes (52) des Bauteils (12) positioniert und befestigt werden soll.

5. Abgaskrümmer (18) nach dem vorhergehenden Anspruch, **dadurch gekennzeichnet, dass** die Fußplatte (46) ringförmig ist und dass der Fuß (52) des Bauteils (12) mindestens eine rotationssymmetrische äußere Anlagefläche aufweist und dass die Verbindungsmittel (22) einen Kragen (54) aufweisen, der den Umfang (56) der ringförmigen Fußplatte (46) und die äußere rotationssymmetrische Anlagefläche des Fußes (52) des Bauteils (12) radial und axial umschließt.

6. Abgaskrümmer (18) nach dem vorhergehenden Anspruch, **dadurch gekennzeichnet, dass** der Umfang der ringförmigen Fußplatte (46) und die äußere Anlagefläche des Fußes (52) des Bauteils (12) kegelstumpfförmig sind und eine gleiche und entgegengesetzte Konizität aufweisen, dass der Kragen (54) gespalten ist und dass er mindestens eine einen "V"-förmigen Querschnitt aufweisende Kehle aufweist, die nach Zusammenfügung des Fußes (52) des Bauteils (12) und der Fußplatte (46) an dem kegelstumpfförmigen Umfang der Fußplatte (46) und an der kegelstumpfförmigen äußeren Anlagefläche des Fußes (52) des Bauteils (12) angebracht werden kann, um sie radial und axial festzulegen.

7. Abgaskrümmer (18) nach dem vorhergehenden Anspruch, **dadurch gekennzeichnet, dass** der Umfang (56) der ringförmigen Fußplatte (46) und der äußeren Anlagefläche des Fußes (52) des Bauteils (12) zylindrisch sind und den gleichen Durchmesser aufweisen, dass der Kragen (54) gespalten ist und dass er mindestens eine einen "U"-förmigen Querschnitt aufweisende Kehle (58) aufweist, die nach Zusammenfügung des Fußes (52) des Bauteils (12) und der Fußplatte (46) an dem zylindrischen Umfang (56) der Fußplatte (46) und an der äußeren zylindrischen Anlagefläche des Fußes (52) des Bauteils (12) angebracht werden kann, um sie radial und axial festzulegen.

8. Abgaskrümmer (18) nach einem der Ansprüche 4 bis 7, **dadurch gekennzeichnet, dass** der zweite Flansch (44) eine im Wesentlichen vertikale Platte (60) aufweist, von der ein unteres Ende (62) mit dem Umfang des ersten Flansches (20) verschweißt ist und von der ein oberes Ende (64) mindestens ein horizontales Paar (66) Ansätze (68) zur senkrechten Befestigung an der Platte (60) aufweist, die im Wesentlichen zur Fußplatte (46) weisen und Mittel zur Befestigung an dem Bauteil (12) aufweisen.

9. Abgaskrümmer (18) nach dem vorhergehenden Anspruch, **dadurch gekennzeichnet, dass** die Befestigungsansätze (68) des zweiten Flansches (44) auf beiden Seiten der vertikalen Ränder (70) der Platte (60) angeordnet sind und dass sie jeweils mindestens zwei Bohrungen (72) aufweisen, die jeweils auf eine Bohrung (72) des anderen Ansatzes (68) ausgerichtet sind und jeweils einen den Körper des Bauteils (12) durchquerenden Befestigungsbolzen (74) aufnehmen sollen.
